# DEMANDE DE BREVET EUROPEEN

(11) **EP 1 430 819 A1**
(43) Date de publication de la demande: **23.06.2004**
(21) Numéro de dépôt: 02028234.9
(22) Date de dépôt: 16.12.2002
(51) Int. Cl.: A47J 31/44

(54) **Embout adaptable à la sortie vapeur d'une machine à café**

(71) Demandeur: NESTEC S.A., 1800 Vevey (CH)
(72) Inventeur: Stieger, Mischa, CH-1090 La Croix, (Lutry) (CH); Yoakim, Alfred, CH-1806 St-Legier-La Chiesaz (FR)
(74) Mandataire: Thomas, Alain

(57) **Abrégé**

La présente invention concerne un embout (1) adaptable à la sortie vapeur d'une machine à café destiné à mousser un liquide, comprenant
- une embouchure (3) pour l'arrivée de vapeur,
- un étranglement (4) dans le prolongement de ladite embouchure,
- et une zone élargie (5) dans l'axe dudit étranglement et de ladite embouchure permettant la sortie du liquide, de section sensiblement égale à la section de l'embouchure et
- perpendiculairement à l'embouchure un conduit (2) pour l'arrivée du liquide et d'air.

## Description

La présente invention concerne un embout adaptable à la sortie vapeur d'une machine à café.

Il est connu dans le domaine des machines à café des dispositifs pour émulsionner un mélange de vapeur, d'air et de lait pour faire des cappuccinos. La demande de brevet WO 00/16674 concerne un tel dispositif. L'inconvénient de ce système est qu'il est difficile de maintenir de bonnes conditions d'hygiène, en raison de l'utilisation de lait qui est un liquide gras, qui reste collé audit dispositif et conduit à des odeurs et des développements bactériologiques.

Le but de la présente invention est de mettre au point un dispositif permettant de faire des cappuccinos sans les inconvénients mentionnés ci-dessus.

La présente invention concerne un embout adaptable à la sortie vapeur d'une machine à café destiné à mousser un liquide, comprenant
- une embouchure pour l'arrivée de vapeur,
- un étranglement dans le prolongement de ladite embouchure,
- et une zone élargie dans l'axe dudit étranglement et de ladite embouchure permettant la sortie du liquide, de section sensiblement égale à la section de l'embouchure et
- perpendiculairement à l'embouchure un conduit pour l'arrivée du liquide et d'air.

De manière préférentielle le liquide utilisé est du lait. L'intérêt de ce système est qu'il est simple et donc de coût peu élevé, ce qui permet de l'utiliser pendant la journée et de le jeter après quelques utilisations pour le remplacer le lendemain par un nouvel embout.

On place l'embout à la sortie vapeur de la machine et il est prêt pour son utilisation qui sera explicitée ci-dessous. On place sur le conduit pour l'arrivée du liquide un tube pour l'aspiration dudit liquide. Ce tube est destiné à être plongé dans le liquide à mousser. Ce tube est de préférence une simple paille, de longueur permettant d'atteindre le récipient contenant le liquide. Lorsqu'on souhaite préparer un cappuccino, on immerge la paille dans le lait et la vapeur d'eau arrivant par l'embouchure de l'embout crée une dépression dans ladite embouchure, ce qui crée un phénomène d'aspiration du lait dans ladite paille.

La zone élargie de l'embout comprend un moyen pour casser le jet. Ce moyen a de préférence la forme d'un accent circonflexe, mais peut aussi être tout moyen faisant éclater le jet. La zone élargie se resserre vers la sortie du liquide et comprend une zone de stabilisation. Cette zone de stabilisation se présente sous la forme d'une partie cylindrique de certaine hauteur dans ladite zone élargie.

L'embout selon l'invention peut être fabriqué en n'importe quel matériau. De préférence, il est en un matériau plastique compatible dans le domaine alimentaire. La pièce est de préférence injectée, par exemple en polypropylène. Mais , on pourrait aussi envisager un embout en inox ou autre matière métallique.

Dans une forme de réalisation préférée, pour les machines à café du commerce, on considère un conduit d'arrivée de liquide et d'air ayant un diamètre de l'ordre du mm et une embouchure d'arrivée de vapeur ayant un diamètre de l'ordre de 10 à 12 mm.

Dans cette forme de réalisation, la zone d'étranglement et la zone de stabilisation ont un diamètre de l'ordre de 3 mm. La partie cylindrique de la zone de stabilisation a une hauteur d'environ 5 à 8 mm.

Il est bien entendu que les dimensions données ci-dessus peuvent varier selon la machine et le débit de vapeur considéré.

La suite de la description est faite en relation avec les dessins, dans lesquels
Fig. 1 est une représentation en perspective de l'embout selon l'invention,
Fig. 2 est une représentation en perspective de l'embout ouvert et
Fig. 3 est une représentation de l'embout ouvert pour l'explication de son fonctionnement.

L'embout (1) selon l'invention comprend un conduit (2) pour l'arrivée du liquide et de l'air, une embouchure (3) pour l'arrivée de vapeur , un étranglement (4) et une zone élargie (5) permettant la sortie du liquide en (6). On voit bien sur la figure que l'embout en formé de deux coques (7,8): ces deux coques sont fabriquées par injection et soudées par ultra-son par exemple ou par tout autre moyen de soudage connu dans la technique le long de la ligne (9).

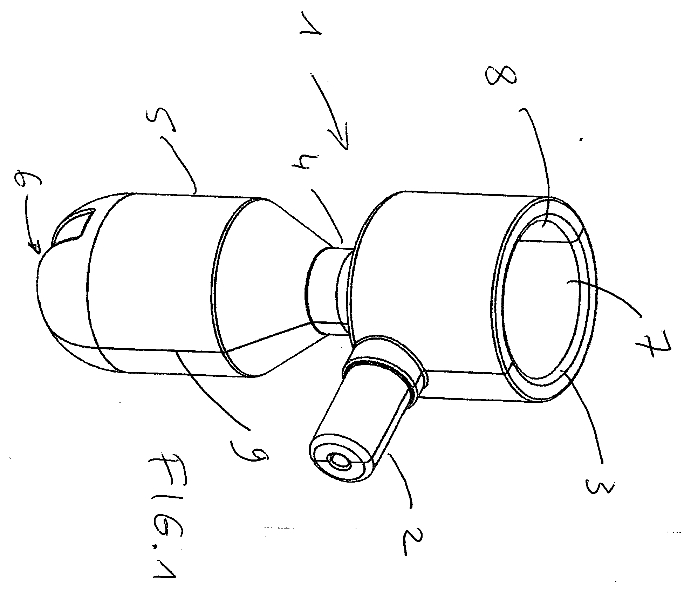

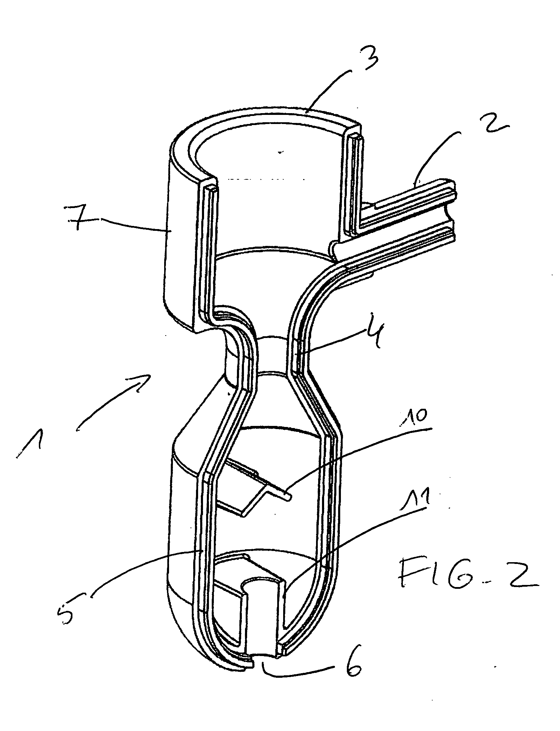

La figure 2 permet de mieux mettre en évidence l'intérieur de l'embout. Les mêmes éléments de la figure 1 ont été affectés des mêmes références. On voit bien sur cette figure le moyen (10) pour casser le jet de liquide et la zone de stabilisation (11) ayant la forme cylindrique de hauteur comprise entre 5 et 8 mm. La hauteur totale de l'embout dans cette forme de réalisation est d'environ 40 mm.

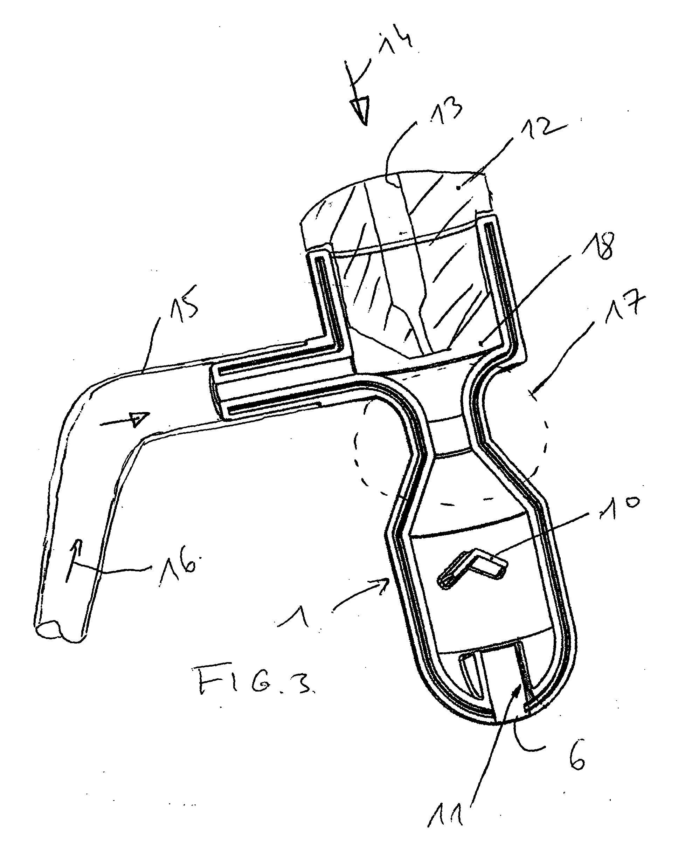

La figure 3 permet de comprendre l'utilisation de l'embout selon l'invention. L'embout (1) est disposé sur la sortie vapeur (12) d'une machine à café. On place ensuite une paille (15) sur le conduit (2). Lorqu'on souhaite faire un cappuccino la vapeur d'eau arrive selon la flèche (14) dans le conduit (13) et crée une dépression dans la zone (18), ce qui a pour effet de faire monter le lait selon la direction (16) dans la paille vers l'embout selon l'invention. La mousse est formée dans la zone (17), le jet est cassé par l'élément (10) et le lait moussé sort par la sortie (6). On peut atteindre avec l'embout un moussage de 100 % et le lait sort à une température d'environ 60 °C.

L'intérêt de cet embout est qu'il est bon marché : on peut donc le jeter après quelques utilisations dans la journée. Il est en une seule partie et compatible avec toutes les pailles du commerce. Le risque de contamination est réduit, car on ne le lave pas.

## Revendications

1. Embout adaptable à la sortie vapeur d'une machine à café destiné à mousser un liquide, comprenant
- une embouchure pour l'arrivée de vapeur,
- un étranglement dans le prolongement de ladite embouchure,
- et une zone élargie dans l'axe dudit étranglement et de ladite embouchure permettant la sortie du liquide, de section sensiblement égale à la section de l'embouchure et
- perpendiculairement à l'embouchure un conduit pour l'arrivée du liquide et d'air.

2. Embout selon la revendication 1, **caractérisé en ce que** le conduit pour l'arrivée du liquide permet la mise en place d'un tube pour l'aspiration dudit liquide.

3. Embout selon l'une des revendications 1 ou 2, **caractérisé en ce que** la zone élargie comprend un moyen pour casser le jet du liquide.

4. Embout selon l'une des revendications 1 à 3, **caractérisé en ce que** la zone élargie comprend à sa sortie une zone de stabilisation.

5. Embout selon l'une des revendications 1 à 4, **caractérisé en ce que** l'embout est injecté en un matériau plastique compatible dans le domaine alimentaire.

6. Embout selon l'une des revendications 1 à 5, **caractérisé en ce que** le conduit d'arrivée de liquide et d'air a un diamètre de l'ordre du mm et l'embouchure d'arrivée de vapeur a un diamètre de l'ordre de 10 à 12 mm.

7. Embout selon l'une des revendications 1 à 6, **caractérisé en ce que** l'étranglement et le zone de stabilisation ont un diamètre de l'ordre de 3 mm.

8. Embout selon l'une quelconque des revendications 1 à 7, **caractérisé en ce que** la zone de stabilisation est une partie cylindrique d'une hauteur d'environ 5 à 8 mm.
